# EUROPEAN PATENT SPECIFICATION

(11) **EP 3 682 742 B1**
(45) Date of publication and mention of the grant of the patent: **11.10.2023**
(21) Application number: 20154843.5
(22) Date of filing: 12.08.2016
(51) Int. Cl.: A23G 3/32

(54) **ALLULOSE CARAMEL**
ALLULOSE CARAMEL
CARAMEL À L'ALLULOSE

(30) Priority: 14.08.2015 EP 15181089
(43) Date of publication of application: 22.07.2020
(62) Divisional of application: 16756987.0
(73) Proprietor: SAVANNA Ingredients GmbH, 50189 Elsdorf (DE)
(72) Inventor: DEGENHARDT, Andreas Georg, 50374 Erftstadt (DE); KOCH, Timo, 50189 Elsdorf (DE); KAUFMANN, Birgit, 50933 Köln (DE)
(74) Representative: Kutzenberger Wolff & Partner

(56) References cited:
- EP-A1- 2 138 048
- EP-A1- 2 801 262
- WO-A1-2014/120564
- JP-A- 2004 269 359
- JP-A- 2008 043 342
- JP-A- 2014 113 059
- US-A1- 2012 076 893
- US-A1- 2014 271 746
- Hisaka Oshima +ῃ ET AL: "Psicose Contents in Various Food Products and its Origin", , 24 April 2006 (2006-04-24), XP055167568, Retrieved from the Internet: URL:http://www.panelamonitor.org/media/doc repo/document/files/psicose-contents-in-va rious-food-products-and-its-origin.pdf [retrieved on 2015-02-05]

## Description

The invention relates to an edible allulose caramel, to a method for the preparation thereof, to its use as well as to foodstuffs and beverages comprising the edible allulose caramel.

Caramel is typically made by cooking sugar until it changes color. Caramel is useful for coloring and for flavoring food. Some caramels are particularly useful for coloring purposes while other caramels are particularly useful for flavoring purposes.

Color and flavor of caramel are based upon a complex mixture of compounds that are produced during the caramelization process. Caramelization is one of the most important types of browning processes in foods, together with Maillard reactions and enzymatic browning. Caramelization leads desirable color and flavor in bakery's goods, coffee, beverages, beer and peanuts. Undesirable effects of caramelization are for example burned sugar smell and blackening.

Caramelization causes important changes in foods, not only in color but also in flavor, viscosity, surface tension, solubility. As no enzymes are involved in the caramelization process, it is a non-enzymatic browning reaction. As besides traces of amino acids that may already be present in the starting material no external amino acids are added, caramelization is not a Maillard reaction.

Caramelization occurs during dry heating and roasting of foods with a high concentration of carbohydrates (sugars). Caramelization can be regarded as the removal of water from a sugar (such as sucrose or glucose) followed by isomerization and polymerization steps. In reality the caramelization process is a complex series of chemical reactions, which is still not completely understood.

The process of caramelization starts with the melting of the sugar at high temperatures, followed by foaming (boiling). At this stage sucrose decomposes into glucose and fructose. This is followed by a condensation step, in which the individual sugars lose water and react with each other to for example difractose-anhydride. The next step is the isomerization of aldoses to ketoses and further dehydration reactions. The last series of reactions include both fragmentation reactions (flavor production) and polymerization reactions (color production).

Caramelization starts at relatively high temperatures as compared to the other browning reactions, and depends on the type of sugar. In foods often several different carbohydrates and other components are present; all these may influence the caramelization temperature as well as the different steps and reactions, and thus the final flavors and colors that are produced. The highest rate of the color development among conventional carbohydrates is caused by fructose, as caramelization of fructose starts at lower temperature. Baked goods made from honey or fructose syrup thus are generally a bit darker than those made with sugar.

During caramelization several flavor components as well as polymeric caramels are produced. Caramels are complex mixture of various high molecular weight components. They can be classified into three groups:
- Caramelans (C₂₄H₃₆O₁₈);
- Caramelens (C₃₆H₅₀O₂₅); and
- Caramelins (C₁₂₅H₁₈₈O₈₀).

These polymers are often used as colors in commercial food products, from colas to soy sauce, confectionary and ice-cream. They are labeled as E150.

Commercial caramels are produced directly by heating sugar, or by heating sugar in the presence of cofactors, such as ammonia or sulphite. This results in caramels with different colors or charged caramels. These aspects are very important for the use of different caramels in foods. Caramels used to color soft drinks should be negatively charged to prevent reaction with phosphates which causes precipitation and loss of color. On the other hand, caramels used for bakery goods should be positively charged.

The FAO/WHO Joint Expert Committee on Food Additives (JECFA) has divided caramel color into four classes depending on if the food grade reactants are used in its manufacturing. Class I (plain caramel colors, European designation E150a) is often considered the most "natural" of the four classes. The carbohydrate is heated simply, and approved food-grade acids or bases may be used in the process. No ammonium or sulfite compounds are allowed in class I production. The resulting caramel color carries a neutral to slightly negative ionic charge. Class II (caustic sulfite caramel colors, European designation E150b) is heated in the presence of sulfite compounds. The resulting caramel color carries a negative ionic charge. Class III (ammonia caramel colors, European designation E150c) is heated with or without acids or alkalis in the presence of ammonia compounds. The resulting low-sulfite caramel color carries a positive ionic charge. Class IV (sulfite ammonia caramel colors, European designation E150d) is heated in the presence of both sulfite and ammonium compounds. The resulting caramel color carries a negative ionic charge.

Caramelization reactions also result in the formation of flavors. Diacetyl is an important flavor compound, produced during the first stages of caramelization. Diacetyl is mainly responsible for a buttery or butterscotch flavor. Diacetyl is not only produced by caramelization, it can also be produced by bacteria in fermented products, such as beer and yoghurt. Besides diacetyl hundreds of other flavor compounds are produced for instance furans like hydroxymethylfurfural (HMF) and hydroxyacetylfuran (HAF), furanones such as hydroxydimethylfuranone (HDF), dihydroxydimethylfuranone (DDF) and maltol from disaccharides and hydroxymaltol from monosaccharides. Hydroxymethylfurfural (HMF) is found in honey, juices, milk but also in cigarettes. Hydroxyacetylfuran (HAF) has a sweet aroma and a low odor threshold (see, e.g. http://www.food-info.net/uk/colour/caramel.htm).

Depending upon the starting material, i.e. the carbohydrate that is employed in the process of manufacture and the reaction conditions, the caramel may contain varying amounts of residual carbohydrate, i.e. starting material that is not converted.

Conventional caramels are not satisfactory in every respect and there is a demand for further caramels and the production thereof, particularly with respect to color formation, flavor and ease of manufacture, e.g. in terms of energy consumption, as well as storage stability. Furthermore, there is a demand for caramels which have advantageous properties when used as aromas and/or coloring agents with respect to color intensity, color clearness, clarity, flavor, taste, ease of manufacture and storage stability.

It is desirable to have a caramel which has advantageous sensory properties with respect to color, aroma, taste and mouthfeel when consumed. These properties can vary depending on the application of the caramel. For some applications a darker color and/or stronger taste of the caramel may be desirable, whereas for other application a lighter color and/or weaker taste are advantageous. The same applies to the mouthfeel which may be crunchy, e.g. in bread, or soft, e.g. in seasonings.

Often marketed caramels change their color, appearance and/or taste when used for the preparation of foodstuff or beverages. This change of color, appearance and/or taste can also be observed when the ingredients or the products derived therefrom are stored for a longer period of time, e.g. a liquid turns cloudy or loses its color. Therefore, a caramel not exhibiting the aforementioned properties is needed.

There is also a demand for caramels that keep the intensity and clearness of their color in solutions comprising water and/or alcohol, i.e. caramels which do not pale and/or turn cloudy or precipitate when added to such solutions, for example as a coloring agent or colored flavoring agent (burnt sugar). Examples of such solutions include liqueurs, cordials, carbonated drinks, teas, coffees and the like as well as solutions which are added during the production of a semi-liquid or non-liquid foodstuff, e.g. dairy products, seasonings, pastry and the like.

Further, conventional caramels and burnt sugars, respectively, often precipitate when used in acid environments because they are not acid-stable. For example, the color of an acid beverage can turn cloudy when a conventional burnt sugar is employed. This can occur directly after adding the burnt sugar or after a certain period of time. In the latter case, a consumer might have the impression the product cannot be consumed anymore. To avoid this change of the optical properties of a product prepared with a burnt sugar or caramel, there is a demand for caramels which are acid-stable. The appearance of such acid-stable caramels should stay clear, i.e. the caramel should not precipitate when used in acidic environments, e.g. liquid or semi-liquid preparations of food or beverages comprising water and/or alcohol and having a low pH-value. Further, it is desirable to have a caramel that - additionally - keeps the intensity of its color when used in acidic environments.

The use of conventional caramels for the production of savory foodstuff or beverages is often problematic because of their strong sweet taste. To avoid an unpleasant and/or unwanted sweet taste in savory products often further steps are necessary to mask the sweet taste of the conventional caramel. Thus, there is a demand for caramels which do not exhibit a strong sweet taste when employed for the preparation of savory foodstuff or beverages, e.g. seasonings, soups, stews, bread and carbonated drinks.

Further, it is desirable to have a caramel which is storage stable. Conventional caramels often turn hard or change their color when stored over a longer period of time. There is also a demand for caramels which enhance the storage stability of products prepared with the caramel.

With respect to processability in industrial and private preparation processes of foodstuffs and beverages there is a demand for caramels having advantageous properties, i.e. having properties which can help to save energy in preparation processes. There is a demand for caramels which can be produced lower temperature, i.e. the melting and/or boiling temperature of the sugar or sugar composition is lower than those of sugars or sugar compositions conventionally employed in the production of caramels. Further, it is desirable to - additionally - reduce the time which is needed to produce a caramel. Such a reduction of production time could for example be achieved by employing a sugar or a sugar composition which melts faster or boils faster than sugars or sugar compositions conventionally employed in the production of caramels.

Production processes can also be improved when the handling of the produced or processed product, here the caramel, is easier and faster. For example, there is a need for caramels having a reduced viscosity compared to conventional caramel. Caramels with a low viscosity can be processed more easily, because for example they can be stirred with less force and because they flow more quickly into or from a vessel. Additionally, a caramel with a low viscosity can be mixed more easily with other ingredients, e.g. liquids or dough.

Further, the consumption of conventional caramels can pose a risk to consumer-health as such caramels have a high physiological caloric value and are often caries-producing. It is therefore desirable to have a caramel which poses lower or no risk to the health of consumers.

Thus, it is an object of the invention to provide caramels and methods for the production thereof having advantages compared to the prior art.

EP 2801262 aims at providing a homogeneous sugar composition containing sucrose and D-psicose, and to provide a food or drink, a drug or a quasi-drug, or a cosmetic in which a sucrose mixture that contains D-psicose is used. Further, in the sugar composition crystals of the sucrose are coated with D-psicose in a crystalline or amorphous state.

Hiska Ohsima, Isao Kimura, Ken Izumori, "Psicose Contents in Various Food Products and its Origin", Food Sci. Technol. Rs. 12 (2), 2006, 137-143, relate to the content of psicose in different food products and disclose that in high sugar products, heat processing had a marked effect on the production of psicose. They suggest that the psicose formation due to heating could be a non-enzymatic reaction.

JP 2004269359 discloses a protein which is modified by Maillard reaction using rare saccharide psicose. The modified protein has a high gel formation property enhanced by the Maillard reaction using rare saccharide psicose. In one embodiment, this is a gel having a high transparency and a high breaking strenght. In another embodiment, this is a modified protein having functions on food improved by the Maillard reaction using rare saccharide psicose and having the property of improving the ability of, especially, food to gel.

JP 2008043342 discloses a method for improving gel-forming properties of food comprising using albumen protein modified by the Maillard reaction using rare sugar psicose.

US 2012/0076893 relates to the provision of a bakery product which has a soft and moist texture, sweetly dissolves in the mouth, has a favorable flavor and is well risen and method of producing the same by using raw material flour obtained by blending a rare sugar-containing isomerized sugar syrup or a rare sugar in wheat flour as a main raw material in the production of bakery product, wherein the rare sugar is at least D-psicose and/or D-allose.

US 2014/0271746 discloses a low-calorie sweetener composition with sweetness synergy, providing a reduction in off-taste and a desirable temporal profile. One aspect of the composition comprises allulose, fructose and sucralose.

EP 2138048 relates to the transformation of food-grade sugars containing D-fructose, in caramels enriched in oligosaccharides with prebiotic activity by using solid acid catalysts or by suing soluble acid polymer catalysts.

WO 2014/120564 relates to reduced sugar confectionaries, and states that it would be desirable to develop a caramel with reduced-sugar content.

JP 2014 113059 aims at providing a method for easily imparting a rich taste to foods and beverages without passing through complicated manufacturing processes. Example 19 relates to a confectionary made from butter and condensed milk, i.e. a final product that is devoted for consumption per se, not an intermediate product, let alone for coloring purposes.

This object has been achieved by the subject-matter of the patent claims.

It has been surprisingly found that allulose caramels, i.e. caramels made from allulose or from compositions containing substantial amounts of allulose, have certain advantages compared to caramels made from other carbohydrates. It has been surprisingly found that the content of 5-hydroxymethylfurfural (HMF) in the product caramel can be influenced by selecting the carbohydrate that is employed as starting material. In particular, it has been surprisingly found that compared to D-glucose, D-fructose, sucrose, maltose and cellobiose, D-allulose exhibits the most pronounced tendency towards HMF-formation and color formation, respectively.

There is indication that caramels made from allulose or from compositions containing substantial amounts of allulose, may have advantageous sensory properties with respect to color, aroma, taste and mouthfeel when eaten or swallowed. Experimental data seems to indicate that caramels according to the invention are especially suitable for the production of savory foodstuff or beverages, as the content of allulose in the product caramel may be low, e.g. less than about 5 %, compared to the sugar content in conventional caramels.

Caramels according to the invention also seem to keep the intensity and clearness of their color in solutions comprising water and/or alcohol (< 50% vol.). Thus, it seems that beverages comprising such a solution and allulose caramel would not decolorize or turn cloudy. Furthermore, there is indication that caramels made from allulose or from compositions containing substantial amounts of allulose may not only be stable in solutions comprising water and/or alcohol (< 50% vol.), but also may enhance storage stability of such solutions and products prepared with such solution comprising allulose caramel.

Further, it seems that allulose caramels, i.e. caramels made from allulose or from compositions containing substantial amounts of allulose may be rendered acid-stable, optionally by subsequent processing steps after caramelization as such. There is indication that such caramels do not have a tendency to precipitate, e.g. in an acidic environment, and additionally seem to keep the intensity of their color when used in acidic compositions comprising water and/or alcohol (< 50% vol.).

Besides advantageous sensory properties, caramels made from allulose or from compositions containing substantial amounts of allulose seem not to turn hard and/or change their color and/or color intensity when stored over a longer period of time at temperatures below 50 °C. Products comprising allulose caramel also seem to have enhanced storage stability.

Further, it has been surprisingly found that in the manufacture of caramels and caramel syrups, employing D-allulose as a starting material instead of conventional sugars such as D-fructose may lower the required reaction temperature and/or reduce the required reaction times. Caramelized products having conventional HMF contents and desired EBC color intensities may thus be obtained from D-allulose at reduced energy consumption and after shorter reaction times. Experimental data indicates that allulose caramel may be produced at temperatures lower than about 160 °C.

Furthermore, there is indication that caramels made from allulose or from compositions containing substantial amounts of allulose may have a lower viscosity compared to conventional caramels while having the same or comparable high color intensity than conventional caramels.

Further, it has been surprisingly found that allulose exhibits prebiotic properties and thus can be used *inter alia* for rendering an edible composition such as a foodstuff or a beverage with prebiotic properties. Further, it has been surprisingly found that allulose has a sweetening capacity that is about 70% of that of sucrose but at the same time has no or nearly no physiological caloric value. Still further, it has been surprisingly found that allulose is not fermented by most microorganisms that are conventionally used in the production of fermented foodstuff, beverages and the like. Thus, in the presence of such microorganisms, allulose remains inert, i.e. storage stable. Furthermore, as allulose is not fermented, it may be less or not caries-producing. Accordingly, allulose can be regarded as a tooth-friendly sugar not exhibiting cariogenic properties. Yet further, it has been surprisingly found that allulose does not have a pronounced laxative effect. Furthermore, it has been surprisingly found that the allulose undergoes Maillard reaction with a pronounced browning effect that is comparable to that of fructose. Thus, allulose is useful as a substitute of fructose, as some people tend to develop fructose intolerance.

A first aspect of the invention relates to a method for the preparation of an edible allulose caramel comprising the steps of
(a) providing an allulose composition, wherein the total content of saccharides including the content of allulose is at least 50 wt.-% relative to the total weight of the allulose composition; and wherein the allulose composition comprises an acid and/or a base; and
(b) caramelizing at least a portion of the allulose that is contained in said allulose composition, wherein step (b) is performed until the obtained caramel has a EBC color intensity of at least 50.

The term "edible" is well acknowledged in the art and for the purpose of the specification is to be understood with respect to humans. Thus, the edible allulose caramel according to the invention is edible by humans and is intended for consumption by humans, e.g. by eating or swallowing.

For the purpose of the invention, an allulose caramel is any caramel that is obtainable by subjecting allulose or a composition comprising allulose to caramelization conditions, i.e. to conditions at which products are obtained selected from caramelans (C₂₄H₃₆O₁₈), caramelens (C₃₆H₅₀O₂₅), caramelins (C₁₂₅H₁₈₈O₈₀), and mixtures thereof. Typically, the caramel comprises residual amounts of allulose. Typically, the allulose caramel has a color that is visible with the naked eye.

Allulose, also referred to as psicose, is a ketohexose. For the purpose of the specification, allulose is preferably provided in form of the D-enantiomer, i.e. D-allulose (CAS no. 551-68-8), which in open chain Fischer projection has the following structure:

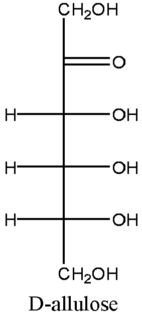

Step (a) of the method according to the invention involves the provision of an allulose composition.

Preferably, the allulose composition is solid, semi-solid or liquid, in each case independently of one another at ambient conditions and at caramelization conditions.

The content of allulose in the allulose composition is not particularly limited.

In a preferred embodiment, the content of allulose in the allulose composition is at least 0.001 wt.-% relative to the total weight of the allulose composition.

In another preferred embodiment, the content of allulose in the allulose composition is at least 85 wt.-% relative to the total weight of the allulose composition.

More preferred, the content of allulose in the allulose composition is at least 0.005 wt.-%, at least 0.01 wt.-%, at least 0.05 wt.-%, at least 0.1 wt.-%, at least 0.5 wt.-%, at least 1.0 wt.-%, at least 2.5 wt.-%, at least 5.0 wt.-%, at least 7.5 wt. %, at least 10 wt.-%, at least 20 wt.-%, at least 30 wt. %, at least 40 wt. %, at least 50 wt.- %, at least 60 wt.-%, at least 70 wt.-%, at least 80 wt. %, at least 90 wt.-%, at least 95 wt.-%, at least 97.5 wt. %, at least 99.0 wt.-%, at least 99.5 wt.-%, or at least 99.9 wt.-%, relative to the total weight of the allulose composition.

In another preferred embodiment, the content of allulose in the allulose composition is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt.-%, not more than 60 wt.-%, not more than 50 wt.-%, not more than 40 wt.-%, not more than 30 wt.-%, not more than 20 wt.-%, not more than 10 wt.-%, not more than 5.0 wt.-%, not more than 2.5 wt.-%, or not more than 1.0 wt.-%, relative to the total weight of the allulose composition.

Preferably, besides allulose, the allulose composition according to the invention contains additional ingredients, such as acids, bases, solvents, catalysts, additional carbohydrates and combinations thereof.

The allulose composition comprises an acid and/or a base. In a preferred embodiment, the allulose composition comprises an acid.

Preferably, the acid is an organic acid or an inorganic acid. Preferred inorganic acids include but are not limited to hydrochloric acid, sulfuric acid and sulfurous acid. Preferred organic acids include but are not limited to carboxylic acids, wherein the carboxylic acid is preferably selected from the group consisting of formic acid, acetic acid, propionic acid, maleic acid, fumaric acid, tartaric acid, and citric acid.

The content of acid in the allulose composition is not particularly limited.

In a preferred embodiment, the content of the acid in the allulose composition is at least 0.001 wt.-%, at least 0.005 wt.-%, at least 0.01 wt.-%, at least 0.05 wt.-%, at least 0.1 wt.-%, at least 0.5 wt.-%, at least 1.0 wt.- %, at least 2.5 wt. %, at least 5.0 wt.-%, at least 7.5 wt.-%, at least 10 wt.-%, at least 20 wt.-%, at least 30 wt.-%, at least 40 wt.-%, at least 50 wt.-%, at least 60 wt.-%, at least 70 wt.-%, at least 80 wt.-%, at least 90 wt.-%, at least 95 wt.-%, at least 97.5 wt.-%, at least 99.0 wt.-%, at least 99.5 wt.-%, or at least 99.9 wt. %, relative to the total weight of the allulose composition.

In another preferred embodiment, the content of the acid in the allulose composition is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt.-%, not more than 60 wt.-%, not more than 50 wt.-%, not more than 40 wt.-%, not more than 30 wt.-%, not more than 20 wt.-%, not more than 10 wt.-%, not more than 5.0 wt.-%, not more than 2.5 wt.-%, or not more than 1.0 wt.-%, relative to the total weight of the allulose composition.

In a preferred embodiment, the allulose composition comprises a base.

Preferably, the base is an organic base or an inorganic base. Preferred inorganic bases include but are not limited to ammonia and hydroxides, wherein the hydroxide is preferably selected from the group consisting of sodium hydroxide, potassium hydroxide, calcium hydroxide and magnesium hydroxide.

The content of base in the allulose composition is not particularly limited.

In a preferred embodiment, the content of the base in the allulose composition is at least 0.001 wt.-%, at least 0.005 wt.-%, at least 0.01 wt.-%, at least 0.05 wt.-%, at least 0.1 wt.-%, at least 0.5 wt.-%, at least 1.0 wt.- %, at least 2.5 wt. %, at least 5.0 wt.-%, at least 7.5 wt.-%, at least 10 wt.-%, at least 20 wt.-%, at least 30 wt.-%, at least 40 wt.-%, at least 50 wt.-%, at least 60 wt.-%, at least 70 wt.-%, at least 80 wt.-%, at least 90 wt.-%, at least 95 wt.-%, at least 97.5 wt.-%, at least 99.0 wt.-%, at least 99.5 wt.-%, or at least 99.9 wt. %, relative to the total weight of the allulose composition.

In another preferred embodiment, the content of the base in the allulose composition is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt.-%, not more than 60 wt.-%, not more than 50 wt.-%, not more than 40 wt.-%, not more than 30 wt.-%, not more than 20 wt.-%, not more than 10 wt.-%, not more than 5.0 wt.-%, not more than 2.5 wt.-%, or not more than 1.0 wt.-%, relative to the total weight of the allulose composition.

In another preferred embodiment, the allulose composition comprises a mixture of sulfuric acid and ammonia.

In a preferred embodiment, the allulose composition comprises an additional ingredient selected from the group consisting of lipoids, lipids, fats, oils, emulsifiers, and combinations thereof.

The content of the additional ingredient in the allulose composition is not particularly limited.

In a preferred embodiment, the content of the additional ingredient in the allulose composition is at least 0.001 wt. %, at least 0.005 wt.-%, at least 0.01 wt.-%, at least 0.05 wt.-%, at least 0.1 wt. %, at least 0.5 wt. %, at least 1.0 wt.-%, at least 2.5 wt. %, at least 5.0 wt.-%, at least 7.5 wt.-%, at least 10 wt.-%, at least 20 wt.-%, at least 30 wt.-%, at least 40 wt.-%, at least 50 wt.-%, at least 60 wt.-%, at least 70 wt.-%, at least 80 wt.-%, at least 90 wt.-%, at least 95 wt.-%, at least 97.5 wt.-%, at least 99.0 wt.-%, at least 99.5 wt.-%, or at least 99.9 wt.-%, relative to the total weight of the allulose composition.

In another preferred embodiment, the content of the additional ingredient in the allulose composition is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt.-%, not more than 60 wt.-%, not more than 50 wt.-%, not more than 40 wt.-%, not more than 30 wt.-%, not more than 20 wt.-%, not more than 10 wt.-%, not more than 5.0 wt.-%, not more than 2.5 wt.-%, or not more than 1.0 wt.-%, relative to the total weight of the allulose composition.

Preferably, the allulose composition is aqueous.

The water content of the allulose composition is not particularly limited.

In a preferred embodiment, the content of water in the allulose composition is at least 0.001 wt.-%, at least 0.005 wt.-%, at least 0.01 wt.-%, at least 0.05 wt.-%, at least 0.1 wt.-%, at least 0.5 wt.-%, at least 1.0 wt.- %, at least 2.5 wt. %, at least 5.0 wt.-%, at least 7.5 wt.-%, at least 10 wt.-%, at least 20 wt.-%, at least 30 wt.-%, at least 40 wt.-%, at least 50 wt.-%, at least 60 wt.-%, at least 70 wt.-%, at least 80 wt.-%, at least 90 wt.-%, at least 95 wt.-%, at least 97.5 wt.-%, at least 99.0 wt.-%, at least 99.5 wt.-%, or at least 99.9 wt. %, relative to the total weight of the allulose composition.

In another preferred embodiment, the content of water in the allulose composition is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt. -%, not more than 60 wt. -%, not more than 50 wt.-%, not more than 40 wt.-%, not more than 30 wt.-%, not more than 20 wt.-%, not more than 10 wt.- %, not more than 5.0 wt.-%, not more than 2.5 wt.-%, or not more than 1.0 wt.-%, relative to the total weight of the allulose composition.

In a preferred embodiment, the allulose composition comprises a syrup, preferably a syrup selected from the group of corn syrup, high fructose corn syrup, reduced sugar corn syrup, glucose syrup, maple syrup, and golden syrup.

In a preferred embodiment, the allulose composition does not comprise a syrup, preferably a syrup selected from the group of corn syrup, high fructose corn syrup, reduced sugar corn syrup, glucose syrup, maple syrup, and golden syrup.

In a preferred embodiment, the allulose composition has a pH value of at least 1, at least 2, at least 3, at least 4, at least 5, at least 6, at least 7, at least 8, at least 9, at least 10, at least 11, at least 12, or at least 13.

In another preferred embodiment, the allulose composition has a pH value of not more than 13, not more than 12, not more than 11, not more than 10, not more than 9, not more than 8, not more than 7, not more than 6, not more than 5, not more than 4, not more than 3, not more than 2, or not more than 1.

In a preferred embodiment, the allulose composition comprises a saccharide (i.e. carbohydrate) other than allulose, wherein said saccharide is preferably a monosaccharide, disaccharide or oligosaccharide. Preferred saccharides include but are not limited to glucose, fructose, mannose, tagatose, lactose, maltose, cellobiose, sucrose, and the mixtures thereof.

In another preferred embodiment, the allulose composition does not comprise a saccharide (i.e. carbohydrate) other than allulose. Said saccharide is a monosaccharide, disaccharide or oligosaccharide selected from the group consisting of glucose, fructose, mannose, tagatose, lactose, maltose, cellobiose, sucrose, and the mixtures thereof. Especially preferred are allulose compositions that do not comprise fructose.

The content of the saccharide other than allulose in the allulose composition is not particularly limited.

In a preferred embodiment, the content of the saccharide other than allulose is at least 0.001 wt.-%, at least 0.005 wt.-%, at least 0.01 wt.-%, at least 0.05 wt.-%, at least 0.1 wt.-%, at least 0.5 wt.-%, at least 1.0 wt.- %, at least 2.5 wt. %, at least 5.0 wt.-%, at least 7.5 wt.-%, at least 10 wt.-%, at least 20 wt.-%, at least 30 wt.-%, at least 40 wt.-%, at least 50 wt.-%, at least 60 wt.-%, at least 70 wt.-%, at least 80 wt.-%, at least 90 wt.-%, at least 95 wt.-%, at least 97.5 wt.-%, at least 99.0 wt.-%, at least 99.5 wt.-%, or at least 99.9 wt. %, relative to the total weight of the allulose composition.

In another preferred embodiment, the content of the saccharide other than allulose is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt. -%, not more than 60 wt. -%, not more than 50 wt.-%, not more than 40 wt.-%, not more than 30 wt.-%, not more than 20 wt.-%, not more than 10 wt.- %, not more than 5.0 wt.-%, not more than 2.5 wt.-%, or not more than 1.0 wt.-%, relative to the total weight of the allulose composition.

The total content of saccharides including the content of allulose is at least 50 wt.-%,at least 60 wt.-%,at least 70 wt.-%, at least 80 wt.-%,at least 90 wt.-%, at least 95 wt.-%, at least 97.5 wt.-%, at least 99.0 wt.-%, at least 99.5 wt.-%, or at least 99.9 wt.-%, relative to the total weight of the allulose composition.

In another preferred embodiment, the total content of saccharides including the content of allulose is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt.-%, not more than 60 wt.- %, relative to the total weight of the allulose composition.

In a preferred embodiment, the total content of saccharides other than allulose is at least 0.001 wt.-%, at least 0.005 wt.-%, at least 0.01 wt.-%, at least 0.05 wt.-%, at least 0.1 wt.-%, at least 0.5 wt.-%, at least 1.0 wt.- %, at least 2.5 wt. %, at least 5.0 wt.-%, at least 7.5 wt.-%, at least 10 wt.-%, at least 20 wt.-%, at least 30 wt.-%, at least 40 wt.-%, at least 50 wt.-%, at least 60 wt.-%, at least 70 wt.-%, at least 80 wt.-%, at least 90 wt.-%, at least 95 wt.-%, at least 97.5 wt.-%, at least 99.0 wt.-%, at least 99.5 wt.-%, or at least 99.9 wt.-%, relative to the total weight of the allulose composition.

In another preferred embodiment, the total content of saccharides other than allulose is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt.-%, not more than 60 wt.-%, not more than 50 wt.-%, not more than 40 wt.-%, not more than 30 wt.-%, not more than 20 wt.-%, not more than 10 wt.-%, not more than 5.0 wt.-%, not more than 2.5 wt.-%, or not more than 1.0 wt.-%, relative to the total weight of the allulose composition.

Step (b) of the method according to the invention involves the caramelization of at least a portion of the allulose that is contained in said allulose composition.

Caramelization reactions are defined as the condensation, isomerization and polymerization reactions of sugars at high temperatures, i.e. no other educts other than sugars are present. In contrast thereto, a Maillard reaction is the reaction between an amino acid and a sugar. The preparation of an allulose caramel according to the invention typically comprises as step (b) a caramelization reaction as described above. However, it is possible that residual contents of allulose in the inventive caramel may undergo Maillard reaction during the production process of a foodstuff or beverage when the caramel according to the invention is used for rendering a foodstuff or a beverage. Typically, Maillard reactions of residual contents of allulose in the inventive caramel can only take place subsequent to the preparation of the allulose caramel according to the invention.

In a preferred embodiment, step (b) of the method according to the invention does not involve a Maillard reaction, i.e. no amino acids and/or proteins are present during the preparation of the allulose caramel.

In another preferred embodiment, step (b) of the method according to the invention involves a Maillard reaction, i.e. amino acids and/or proteins are present during the preparation of the allulose caramel.

Preferably, step (b) of the method according to the invention does not involve the use of a catalyst. More preferably, step (b) of the method according to the invention does not involve the use of a solid acid catalyst selected from the group consisting of zeolites, clays or ion-exchange resins in its acid form and/or the use of a soluble acid polymer catalyst of high molecular weight.

In another preferred embodiment, step (b) of the method according to the invention involves the use of a catalyst. More preferably, step (b) of the method according to the invention involves the use of a solid acid catalyst selected from the group consisting of zeolites, clays or ion-exchange resins in its acid form and/or the use of a soluble acid polymer catalyst of high molecular weight.

In a preferred embodiment, step (b) involves the application of heat. In a preferred embodiment, the heat is applied by infrared irradiation or ultrasound.

In a preferred embodiment, in step (b) the allulose composition is heated to a temperature of at least 30 °C, at least 35 °C, at least 40 °C, at least 45 °C, at least 50 °C, at least 55 °C, at least 60 °C, at least 65 °C, at least 70 °C, at least 75 °C, at least 80 °C, at least 85 °C, at least 90 °C, at least 95 °C, at least 100 °C, at least 105 °C, at least 110 °C, at least 115 °C, at least 120 °C, at least 125 °C, at least 130 °C, at least 135 °C, at least 140 °C, at least 145 °C, at least 150 °C, at least 155 °C, at least 160 °C, at least 165 °C, at least 170 °C, at least 175 °C, at least 180 °C, at least 185 °C, at least 190 °C, at least 195 °C, or at least 200 °C.

In another preferred embodiment, in step (b) the allulose composition is heated to a temperature of not more than 200 °C, not more than 195 °C, not more than 190 °C, not more than 185 °C, not more than 180 °C, not more than 175 °C, not more than 170 °C, not more than 165 °C, not more than 160 °C, not more than 155 °C, not more than 150 °C, not more than 145 °C, not more than 140 °C, not more than 135 °C, not more than 130 °C, not more than 125 °C, not more than 120 °C, not more than 115 °C, not more than 110 °C, not more than 105 °C, not more than 100 °C, not more than 95 °C, not more than 90 °C, not more than 85 °C, not more than 80 °C, not more than 75 °C, not more than 70 °C, not more than 65 °C, not more than 60 °C, not more than 55 °C, not more than 50 °C, not more than 45 °C, not more than 40 °C, not more than 35 °C, or not more than 30 °C.

While it is principally possible that in the course of step (b) the allulose composition is heated to different temperatures, the temperature is preferably kept constant.

Preferably, step (b) is performed under at the given reaction conditions an allulose caramel having the desired properties is obtained. Suitable reaction times can be determined by routine experimentation.

In a preferred embodiment, step (b) is performed for a duration of at least 5 minutes, at least 10 minutes, at least 15 minutes, at least 20 minutes, at least 25 minutes, at least 30 minutes, at least 35 minutes, at least 40 minutes, at least 45 minutes, at least 50 minutes, at least 55 minutes, at least 60 minutes, at least 75 minutes, at least 90 minutes, at least 105 minutes, at least 120 minutes, at least 180 minutes, at least 240 minutes, at least 300 minutes, at least 360 minutes, at least 420 minutes, at least 480 minutes, at least 540 minutes, or at least 600 minutes.

In another preferred embodiment, step (b) is performed for a duration of not more than 600 minutes, not more than 540 minutes, not more than 480 minutes, not more than 420 minutes, not more than 360 minutes, not more than 300 minutes, not more than 240 minutes, not more than 180 minutes, not more than 120 minutes, not more than 105 minutes, not more than 90 minutes, not more than 75 minutes, not more than 60 minutes, not more than 55 minutes, not more than 50 minutes, not more than 45 minutes, not more than 40 minutes, not more than 35 minutes, not more than 30 minutes, not more than 25 minutes, not more than 20 minutes, not more than 15 minutes, not more than 10 minutes, or not more than 5 minutes.

In a preferred embodiment, step (b) is performed at elevated pressure.

Preferably, the pressure is at least 0.1 bar, at least 0.2 bar, at least 0.3 bar, at least 0.4 bar, at least 0.5 bar, at least 0.6 bar, at least 0.7 bar, at least 0.8 bar, at least 0.9 bar, at least 1.0 bar, at least 2 bar, at least 3 bar, at least 4 bar, at least 5 bar, at least 6 bar, at least 7 bar, at least 8 bar, at least 9 bar, or at least 10 bar above atmospheric pressure.

In a preferred embodiment, step (b) is performed until the obtained caramel has a color of class I (E150a), class II (E150b), class III (E150c), or class IV (E150d).

Commonly, the coloring capacity can be quantified in EBC units (European Brewery Convention).

In a preferred embodiment, step (b) is performed until the obtained caramel has a coloring capacity of not more than 18000 EBC, or not more than 17000 EBC, more preferably not more than 16000 EBC. In preferred embodiments, step (b) is performed until the obtained caramel has a coloring capacity within the range of 1000±500 EBC; 2000±1000 EBC; 3000±2000 EBC, 3000±1000 EBC; 4000±3000 EBC, 4000±2000 EBC, 4000±1000 EBC; 5000±4000 EBC, 5000±3000 EBC, 5000±2000 EBC, 5000±1000 EBC; 6000±5000 EBC, 6000±4000 EBC, 6000±3000 EBC, 6000±2000 EBC, 6000±1000 EBC; 7000±6000 EBC, 7000±5000 EBC, 7000±4000 EBC, 7000±3000 EBC, 7000±2000 EBC, 7000±1000 EBC; 8000±7000 EBC, 8000±6000 EBC, 8000±5000 EBC, 8000±4000 EBC, 8000±3000 EBC, 8000±2000 EBC, 8000±1000 EBC; 9000±8000 EBC, 9000±7000 EBC, 9000±6000 EBC, 9000±5000 EBC, 9000±4000 EBC, 9000±3000 EBC, 9000±2000 EBC, 9000±1000 EBC; 10000±8000 EBC, 10000±7000 EBC, 10000±6000 EBC, 10000±5000 EBC, 10000±4000 EBC, 10000±3000 EBC, 10000±2000 EBC, 10000±1000 EBC; 11000±7000 EBC, 11000±6000 EBC, 11000±5000 EBC, 11000±4000 EBC, 11000±3000 EBC, 11000±2000 EBC, 11000±1000 EBC; 12000±6000 EBC, 12000±5000 EBC, 12000±4000 EBC, 12000±3000 EBC, 12000±2000 EBC, 12000±1000 EBC; 13000±5000 EBC, 13000±4000 EBC, 13000±3000 EBC, 13000±2000 EBC, 13000±1000 EBC; 14000±4000 EBC, 14000±3000 EBC, 14000±2000 EBC, 14000±1000 EBC; 15000±3000 EBC, 15000±2000 EBC, 15000±1000 EBC; 16000±2000 EBC, 16000±1000 EBC; or 17000±1000 EBC.

In another preferred embodiment, step (b) is performed until the obtained caramel has a coloring capacity of at least 18000 EBC, or at least 20000 EBC, or at least 25000 EBC, or at least 30000 EBC, or at least 35000 EBC, or at least 40000 EBC, or at least 45000 EBC, or at least 50000 EBC, or at least 55000 EBC, or at least 60000 EBC, or at least 65000 EBC, or at least 70000 EBC, or at least 75000 EBC, or at least 80000 EBC, or at least 85000 EBC, or at least 90000 EBC, or at least 95000 EBC, or at least 100000 EBC. In preferred embodiments, step (b) is performed until the obtained caramel has a coloring capacity within the range of 20000±15000 EBC, 20000±10000 EBC, 30000±20000 EBC, 30000±15000 EBC, 30000±10000 EBC, 40000±20000 EBC, 40000±15000 EBC, 40000±10000 EBC, 50000±20000 EBC, 50000±15000 EBC, 50000±10000 EBC, 60000±20000 EBC, 60000±15000 EBC, 60000±10000 EBC, 70000±20000 EBC, 70000±15000 EBC, 70000±10000 EBC, 80000±20000 EBC, 80000±15000 EBC, or 80000±10000 EBC.

In still another preferred embodiment, step (b) is performed until the obtained caramel has a coloring capacity of at least 100000 EBC, or at least 200000 EBC, or at least 250000 EBC, or at least 300000 EBC, or at least 350000 EBC, or at least 400000 EBC, or at least 450000 EBC, or at least 500000 EBC, or at least 550000 EBC, or at least 600000 EBC, or at least 650000 EBC, or at least 700000 EBC, or at least 750000 EBC, or at least 800000 EBC, or at least 850000 EBC, or at least 900000 EBC, or at least 950000 EBC, or at least 1000000 EBC.

In a preferred embodiment, the method according to the invention comprises the additional step of (c) adjusting the pH value of the product obtained in step (b) to a value within the range of from 6 to 8, preferably by adding a sufficient quantity of an acid and a base, respectively.

A second aspect of the invention relates to an allulose caramel.

For the purpose of the invention, an allulose caramel is derived from allulose and preferably comprises residual amounts of allulose which have not been caramelized.

Another aspect of the invention relates to a caramel obtained from allulose or from a saccharide mixture comprising allulose (allulose caramel). Preferably, the allulose caramel is obtainable by a method according to the invention as described above.

All preferred embodiments that have been described above in connection to the method according to the invention also analogously apply to the caramel according to the invention and are thus not repeated hereinafter.

The properties and the composition of the allulose caramel according to the invention are typically influenced by composition of the allulose composition provided in step (a) and by the caramelizing of step (b).

Preferably, the allulose caramel according to the invention is solid, semi-solid or liquid.

In a preferred embodiment, the allulose caramel according to the invention has a residual content of allulose of at least 0.001 wt.-%, at least 0.005 wt.-%, at least 0.01 wt.-%, at least 0.05 wt.-%, at least 0.1 wt.-%, at least 0.5 wt.-%, at least 1.0 wt. %, at least 2.5 wt.-%, at least 5.0 wt.-%, at least 7.5 wt.-%, at least 10 wt.-%, at least 20 wt.-%, at least 30 wt. %, at least 40 wt.-%, at least 50 wt.-%, at least 60 wt. %, at least 70 wt. %, at least 80 wt.-%, at least 90 wt.-%, at least 95 wt.-%, at least 97.5 wt.-%, at least 99.0 wt.-%, relative to the total weight of the caramel.

In another preferred embodiment, the allulose caramel according to the invention has a residual content of allulose of not more than 99.0 wt.-%, not more than 97.5 wt.-%, not more than 95 wt.-%, not more than 90 wt.-%, not more than 80 wt.-%, not more than 70 wt.-%, not more than 60 wt.-%, not more than 50 wt.-%, not more than 40 wt. -%, not more than 30 wt.-%, not more than 20 wt.-%, not more than 10 wt. -%, not more than 5.0 wt.-%, not more than 2.5 wt.-%, or not more than 1.0 wt.-%, relative to the total weight of the caramel.

In a preferred embodiment, the allulose caramel according to the invention has a positive charge.

In another preferred embodiment, the allulose caramel according to the invention has a negative charge.

Preferably, the allulose caramel according to the invention does not have a high content in difructose dianhydrides and glycosylated difructose dianhydrides.

In a preferred embodiment, the allulose caramel according to the invention comprises an additional ingredient selected from the group consisting of lipoids, lipids, fats, oils, emulsifiers, and combinations thereof.

In a preferred embodiment, the content of the additional ingredient in the allulose composition is at least 0.001 wt. %, at least 0.005 wt.-%, at least 0.01 wt.-%, at least 0.05 wt.-%, at least 0.1 wt. %, at least 0.5 wt. %, at least 1.0 wt.-%, at least 2.5 wt. %, at least 5.0 wt.-%, at least 7.5 wt.-%, at least 10 wt.-%, at least 20 wt.-%, at least 30 wt.-%, at least 40 wt.-%, at least 50 wt.-%, at least 60 wt.-%, at least 70 wt.-%, at least 80 wt.-%, at least 90 wt.-%, at least 95 wt.-%, at least 97.5 wt.-%, at least 99.0 wt.-%, at least 99.5 wt.-%, or at least 99.9 wt.-%, relative to the total weight of the caramel.

In another preferred embodiment, the content of the additional ingredient in the allulose composition is not more than 99.9 wt.-%, not more than 99.5 wt.-%, not more than 99.0 wt.-%, not more than 97.5 wt.-%, not more than 95 wt.-%, not more than 90 wt.-%, not more than 80 wt.-%, not more than 70 wt.-%, not more than 60 wt.-%, not more than 50 wt.-%, not more than 40 wt.-%, not more than 30 wt.-%, not more than 20 wt.-%, not more than 10 wt.-%, not more than 5.0 wt.-%, not more than 2.5 wt.-%, or not more than 1.0 wt.-%, relative to the total weight of the caramel.

Preferably, the allulose caramel according to the invention has a (residual) content of hydroxymethylfurfural (HMF) of not more than 1000 ppm, not more than 950 ppm, not more than 900 ppm, not more than 850 ppm, not more than 800 ppm, not more than 750 ppm, not more than 700 ppm, not more than 650 ppm, not more than 600 ppm, not more than 550 ppm, not more than 500 ppm, not more than 450 ppm, not more than 400 ppm, not more than 350 ppm, not more than 300 ppm, not more than 250 ppm, not more than 200 ppm, not more than 150 ppm, not more than 100 ppm, not more than 90 ppm, not more than 80 ppm, not more than 70 ppm, not more than 60 ppm, not more than 50 ppm, not more than 40 ppm, not more than 30 ppm, not more than 20 ppm, or not more than 10 ppm, relative to the total weight of the caramel.

The allulose caramel according to the invention is particularly useful for coloring food.

The the allulose caramel according to the invention has a EBC color intensity of at least 50, or at least 100, or at least 150, or at least 200, or at least 250, or at least 300, or at least 350, or at least 400, or at least 450, or at least 500, or at least 550, or at least 600, or at least 650, or at least 700, or at least 750, or at least 800, or at least 850, or at least 900, or at least 950, or at least 1000.

In another preferred embodiment, the allulose caramel according to the invention has a EBC color intensity of not more than 1000, or not more than 950, or not more than 900, or not more than 850, or not more than 800, or not more than 750, or not more than 700, or not more than 650, or not more than 600, or not more than 550, or not more than 500, or not more than 450, or not more than 400, or not more than 350, or not more than 300, or not more than 250, or not more than 200, or not more than 150, or not more than 100, or not more than 50.

Another aspect of the invention relates to the use of a caramel according to the invention (allulose caramel) as prebiotic or for rendering a foodstuff or a beverage with prebiotic properties. Another aspect of the invention relates to the use of a caramel according to the invention (allulose caramel) as aroma. Another aspect of the invention relates to the use of a caramel according to the invention (allulose caramel) as coloring agent.

All preferred embodiments that have been described above in connection to the caramel according to the invention and the method for the production thereof also analogously apply to the foodstuff or beverage according to the invention and are thus not repeated hereinafter.

Another aspect of the invention relates to a foodstuff or a beverage comprising a caramel according to the invention (allulose caramel).

All preferred embodiments that have been described above in connection to the caramel according to the invention also analogously apply to the foodstuff or beverage according to the invention and are thus not repeated hereinafter.

Preferably, the foodstuff or beverage according to the invention is solid, semi-solid or liquid.

Preferably, the foodstuff or beverage according to the invention is selected from foodstuffs and beverages.

Preferably, the foodstuff is selected from the group consisting of basic foods and prepared foods.

Preferred basic foods include but are not limited to breads, dairy products, eggs, legumes, edible plants, edible fungi, meat, edible nuts and seeds, cereals, seafood, and staple foods.

Preferred prepared foods include but are not limited to appetizers, condiments, confectionery, convenience foods, desserts, dips, pastes and spreads, dried foods, dumplings, fast food, fermented foods, halal food, kosher food, noodles, pies, salads, sandwiches, sauces, snack foods, soups, and stews.

Preferred foodstuffs are selected from the group consisting of basic foods and prepared foods. Preferred basic foods are selected from the group consisting of breads, dairy products, eggs, legumes, edible plants, edible fungi, meat, edible nuts and seeds, cereals, seafood, and staple foods. Preferred prepared foods are selected from the group consisting of appetizers, condiments, confectionery, convenience foods, desserts, dips, pastes and spreads, dried foods, dumplings, fast food, fermented foods, halal food, kosher food, noodles, pies, salads, sandwiches, sauces, snack foods, soups, and stews. In a preferred embodiment, the foodstuff is selected from the group consisting of food, functional food, food ingredients, dietary supplements, and feed.

Preferred beverages are selected from the group consisting of non-alcoholic drinks and alcoholic drinks. Preferred non-alcoholic drinks are selected from the group consisting of water, milk, tea, coffee, carbonated drinks, juice and juice drinks. Preferred alcoholic drinks are selected from the group consisting of beer, cider, wine, and spirits.

Particularly preferred foodstuffs and beverages include but are not limited to
- basic materials for beverages and drinks;
- formula diets;
- confectionaries;
- fruit preparations;
- sausages, cold cut and meat products;
- dairy products; and
- bakery products.

Examples of foodstuffs and beverages according to the invention include but are not limited to
- gels such as jelly, cream caramels, and yogurts;
- seasonings such as mayonnaises, ketchups, dressings, sauces, basting sauces, soups, and processed vegetable products;
- restorable foods such as curries, hashed beefs, meat sauces, stews, and soups;
- chilled foods;
- processed meat products such as hamburger steaks, bacons, sausages, salami sausages, and hams;
- fish paste products such as minced and steamed fish products, fish sausages, fish hams and sausages, and fried minced and steamed fish products;
- processed wheat products such as breads, raw noodles, dried noodles, macaronis, spaghettis, Chinese bun pastries, cake mixes, premixes, white sauces, and pastries for jiaozis and spring rolls;
- canned and bottled foods such as curries, sauces, soups, fish boiled in soy sauce, and jams;
- confectioneries such as candies, lozenges, tablet confectioneries, chocolates, biscuits, cookies, rice crackers, Japanese and Western cakes, unbaked cakes, snacks, sugar confectioneries, and cream caramels;
- deep-fried foods;
- cooked and processed foods such as croquettes, jiaozis, and Chinese buns; and
- pastes such as vegetable pastes, minced meats, fruit pastes, and seafood pastes;
- dairy products such as ice creams, ice milks, lacto-ices, whipping creams, confluents, butters, yogurts, cheeses, and white sauces;
- processed oils and fats such as margarines, fat spreads, and shortenings;
- carbonated beverages such as colas, carbonated fruit beverages, alcoholic fruit beverages, fruit beverages mixed with dairy products, fruit juices, fruit-containing beverages;
- lactic acid beverages or milk beverages such as milk drinks, coffees, cow's milks, soy milks, cocoa milks, fruit milks, and yogurts; and
- tea beverages such as natural leaf teas, oolong teas, green powdered teas, black teas.

Preferred beverages include but are not limited to non-alcoholic drinks and alcoholic drinks.

Preferred non-alcoholic drinks are selected from the group consisting of water, milk, tea, coffee, carbonated drinks, juice and juice drinks.

Preferred alcoholic drinks are selected from the group consisting of beer, cider, wine, and spirits.

The following examples further illustrate the invention but are not to be construed as limiting its scope.

The tendency of the monosaccharides D-fructose, D-allulose, and D-glucose as well as of the disaccharides sucrose, maltose and cellobiose towards formation of 5-hydroxymethylfurfural (HMF) and changes of color intensities was analytically characterized. Color intensities were quantified according to the European Brewing Convention (EBC) color method. By employing identical weights and molar quantities, the monosaccharides and the disaccharides were compared with one another with respect to HMF formation (quantified according to DIN 10751-3 (2002)) and EBC-color intensities at identical heating temperatures and heating times.

Centrifuge tubes having a volume of 10 mL were heated by means of an aluminum block in an oil bath on a magnetic stirrer with electronic temperature adjustment.

### Example 1 (D-fructose at 120 °C in 0.1 M H₂SO₄):

D-fructose was dissolved in 0.1 M H₂SO₄ (65 g/L, 360 mM). In each case, 10 mL of the solution were transferred into centrifuge tubes and subsequently stirred in the aluminum heating block at 120 °C. After 0, 20, 40, 60, 80, 100, 120, 140, 160, and 180 minutes, a centrifuge tube was removed, cooled down with tap water (2.0 minutes), and further analyzed for color and HMF content.

With advancing heating time a significant increase of color of the reaction solutions was observed. Further, after 80 minutes of heating, the formation of precipitating black particles was observed, the quantitative content of which steadily increased during subsequent heating. Furthermore, a significant increase of foam formation and of the potential for foam formation after stirring, respectively, was observed.

Besides the increase of color, a significant increase in the content of HMF was observed. The content of HMF was analyzed in accordance with DIN 10751-3 (2002). After 180 minutes, an average (n=2) maximum content of HMF amounting to 13.8 g per kg reaction mixture and per kg original substance, respectively, was determined (13,800 ppm). Said average maximum content corresponded to a yield of 30.4 wt.-%, such that after 180 minutes of heating, almost one third of all D-fructose molecules that had been employed as starting material were converted into HMF-molecules.

The measured values are summarized in the table here below:

| time [min] | HMF [g/kg OS] | | |
|---|---|---|---|
| | #1 | #2 | mean |
| 0 | 0.0 | 0.0 | 0.0 |
| 20 | 1.2 | 1.2 | 1.2 |
| 40 | 5.9 | 6.8 | 6.3 |
| 60 | 6.0 | 6.9 | 6.5 |
| 80 | 7.5 | 7.1 | 7.3 |
| 100 | 9.9 | 11.2 | 10.5 |
| 120 | 11.1 | 13.3 | 12.2 |
| 140 | 11.7 | 13.2 | 12.4 |
| 160 | 12.8 | 14.7 | 13.8 |
| 180 | 12.6 | 15.1 | 13.8 |

| | | | |
|---|---|---|---|
| OS = original substance mean = arithmetic mean value | | | |

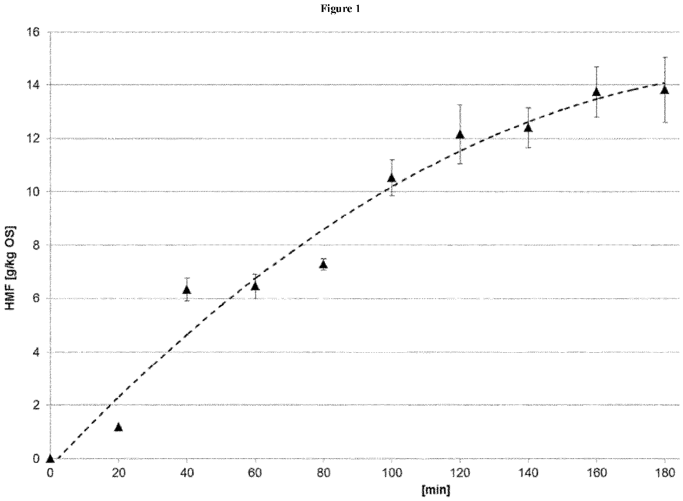

These results are further illustrated in Figure 1.

In view of the significant formation of HMF, the experimental setting turned out to be suitable for the simulation of caramelization of sugars on laboratory scale. The following examples were conducted on the basis of this finding.

### Example 2 (D-fructose, D-glucose and D-allulose at 120 °C in 0.1 M H₂SO₄):

In analogy to Example 1, D-fructose, D-glucose and D-allulose were each dissolved in 0.1 M H₂SO₄ (65 g/L, 360 mM). In each case, 9.0 mL of the solution were transferred into centrifuge tubes and subsequently stirred in the aluminium heating block at 120 °C. After 0, 30, 90, and 180 minutes, a centrifuge tube was removed, cooled down with tap water (2.0 minutes), and further analyzed for color and HMF content.

All three monosaccharides showed an increase in color over time. However, among the monosaccharides significant differences were observed with respect to EBC color intensities. While during heating under the reaction conditions only a slight color formation could be detected for the samples containing D-glucose, a significant color formation occurred in the samples containing D-fructose and D-allulose; at 120 °C only minor relative differences in EBC-color intensities could be detected for D-fructose and D-allulose in comparison to one another.

The measured values are summarized in the table here below:

| time [min] | EBC color intensity | | |
|---|---|---|---|
| | D-fructose | D-glucose | D-allulose |
| 0 | 0 | 0 | 0 |
| 30 | 30 | 2 | 67 |
| 90 | 173 | 3 | 238 |
| 180 | 267 | 8 | 270 |

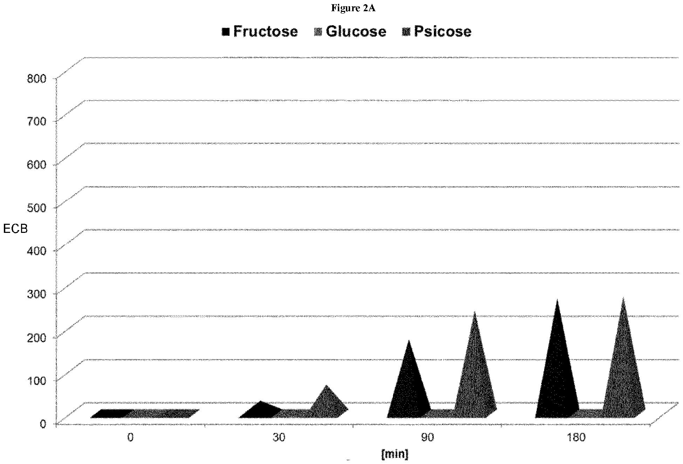

These results are further illustrated in Figure 2A.

Furthermore, all three monosaccharides showed an increase of HMF content under acidic conditions at 120 °C over time. Under these conditions, D-glucose showed the least pronounced potential for HMF formation (0.4 g per kg reaction mixture after 180 minutes, corresponding to a yield of 0.4 wt.-%). D-fructose and D-allulose yielded at the end of the experiments a maximum content of 13.2 g/kg and 17.5 g/kg, corresponding to a yield of 29.1 wt.-% and 38.5 wt.-%, respectively. At all points in time, D-allulose reached significantly higher contents of HMF than D-fructose. With respect to HMF formation, D-allulose is thus clearly superior over D-fructose.

The measured values are summarized in the table here below:

| time [min] | HMF [g/kg OS] | | | | | | | | |
|---|---|---|---|---|---|---|---|---|---|
| | D-fructose | | | D-glucose | | | D-allulose | | |
| | #1 | #2 | mean | #1 | #2 | mean | #1 | #2 | mean |
| 0 | 0.0 | 0.0 | 0.0 | 0.0 | 0.0 | 0.0 | 0.0 | 0.0 | 0.0 |
| 30 | 3.6 | 3.6 | 3.6 | 0.0 | 0.0 | 0.0 | 7.2 | 7.2 | 7.2 |
| 90 | 9.3 | 9.3 | 9.3 | 0.1 | 0.1 | 0.1 | 16.2 | 16.5 | 16.4 |
| 180 | 13.0 | 13.3 | 13.2 | 0.2 | 0.2 | 0.2 | 17.2 | 17.8 | 17.5 |

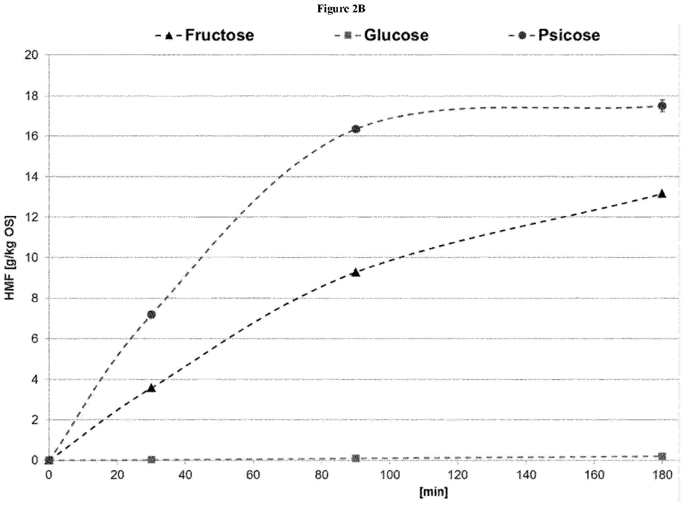

These results are further illustrated in Figure 2B.

### Example 3 (maltose, cellobiose and sucrose at 160 °C in H₂O):

In pure water and at an elevated temperature of 160 °C, the disaccharides maltose, cellobiose and sucrose were tested. Maltose, cellobiose and sucrose (saccharose) were each separately of one another dissolved in bidistilled water (65 g/L, 190 mM). In each case, 9.0 mL of the solution were transferred into centrifuge tubes and subsequently stirred in the aluminium heating block at 160 °C. After 0, 30, 90, and 180 minutes, a centrifuge tube was removed, cooled down with tap water (2.0 minutes), and further analyzed for color and HMF content.

All three disaccharides showed an increase in color over time. However, among the disaccharides differences were observed with respect to EBC color intensities, whereas significant increases in color formation were observed over time in all samples. Pronounced color formation was observed in the sample containing sucrose (saccharose), which provided a maximum color intensity of 133 EBC after 180 minutes heating at 160 °C. The relative differences in EBC-color intensities of maltose compared to cellobiose were similar, whereas in each case cellobiose showed slightly higher color intensities.

The measured values are summarized in the table here below:

| time [min] | EBC color intensity | | |
|---|---|---|---|
| | maltose | cellobiose | sucrose |
| 0 | 0 | 0 | 0 |
| 30 | 5 | 5 | 1 |
| 90 | 4 | 9 | 23 |
| 180 | 17 | 29 | 133 |

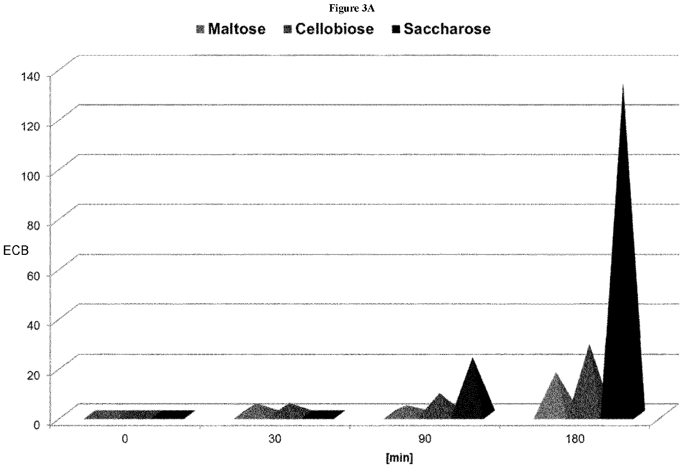

These results are further illustrated in Figure 3A.

Furthermore, all three disaccharides showed an increase of HMF content in aqueous solution at 160 °C over time. Under these conditions, maltose and cellobiose yielded at the end of the experiments a maximum content of 0.8 g per kg reaction mixture and 1.2 g per kg reaction mixture, corresponding to a yield of 3.4 wt.-% and 5.0 wt.-%, respectively. The highest HMF content of 5.6 g per kg reaction mixture was reached after 180 minutes at 160 °C in the sample containing sucrose corresponding to a yield of 23.4 wt.-%. Compared to maltose and cellobiose, sucrose is preferred with respect to HMF formation under thermal conditions. There is no wish to be bound to any scientific theory, but this might be due to the presence of a D-fructose building block in the disaccharide sucrose. Maltose and cellobiose are exclusively composed of D-glucose building blocks which *per se* are less suitable for HMF formation.

The measured values are summarized in the table here below:

| time [min] | HMF [g/kg OS] | | | | | | | | |
|---|---|---|---|---|---|---|---|---|---|
| | maltose | | | cellobiose | | | sucrose | | |
| | #1 | #2 | mean | #1 | #2 | mean | #1 | #2 | mean |
| 0 | 0.0 | 0.0 | 0.0 | 0.0 | 0.0 | 0.0 | 0.0 | 0.0 | 0.0 |
| 30 | 0.1 | 0.1 | 0.1 | 0.1 | 0.1 | 0.1 | 0.0 | 0.0 | 0.0 |
| 90 | 0.6 | 0.5 | 0.6 | 0.6 | 0.6 | 0.6 | 1.8 | 1.8 | 1.8 |
| 180 | 0.8 | 0.9 | 0.8 | 1.2 | 1.2 | 1.2 | 5.6 | 5.6 | 5.6 |

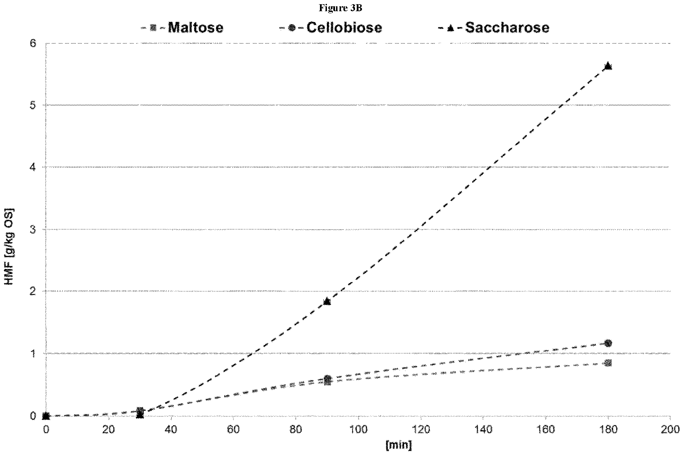

These results are further illustrated in Figure 3B.

### Example 4 (D-fructose, D-glucose and D-allulose at 160 °C in H₂O):

D-fructose, D-glucose and D-allulose were each separately of one another dissolved in bidistilled water (65 g/L, 360 mM). In each case, 9.0 mL of the solution were transferred into centrifuge tubes and subsequently stirred in the aluminum heating block at 160 °C. After 0, 30, 90, and 180 minutes, a centrifuge tube was removed, cooled down with tap water (2.0 minutes), and further analyzed for color and HMF content.

All three monosaccharides showed an increase in color over time. However, among the monosaccharides differences were observed with respect to EBC color intensities, whereas only minor increases in color formation were observed over time in the samples containing D-glucose. Pronounced but significantly different color formation was observed in the sample containing D-fructose and D-allulose. After 180 minutes heating at 160 °C, D-allulose provided a maximum color intensity of 727 EBC, whereas D-fructose provided only 294 EBC.

The measured values are summarized in the table here below:

| time [min] | EBC color intensity | | |
|---|---|---|---|
| | D-fructose | D-glucose | D-allulose |
| 0 | 0 | 0 | 0 |
| 30 | 11 | 8 | 12 |
| 90 | 94 | 16 | 139 |
| 180 | 294 | 49 | 729 |

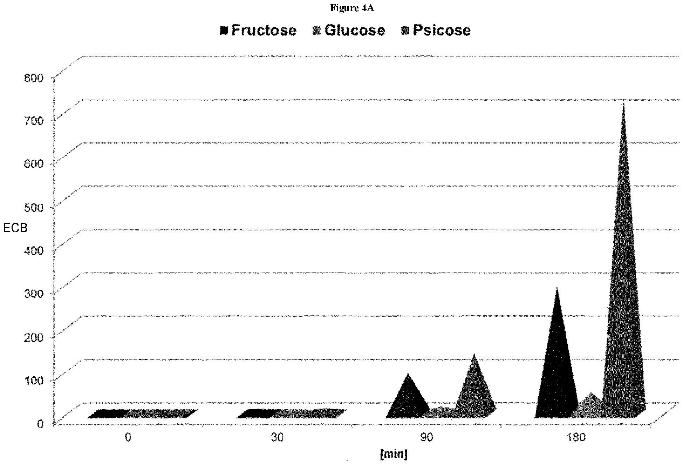

These results are further illustrated in Figure 4A.

Furthermore, all three monosaccharides showed an increase of HMF content in aqueous solution at 160 °C over time. Under these conditions, D-glucose showed the least pronounced tendency towards HMF formation and yielded at the end of the experiments a maximum content of 1.5 g per kg reaction mixture corresponding to a yield of 3.3 wt.-%. D-fructose and D-allulose reached at the end of the experiments maximum HMF contents of 11.1 g per kg reaction mixture and 18.8 g per kg reaction mixture corresponding to a yield of 24.4 wt.-% and 41.0 wt.-%, respectively. Compared to D-fructose, at all points in time D-allulose provided significantly higher contents of HMF. With respect to HMF formation, D-allulose is therefore clearly superior over D-fructose.

The measured values are summarized in the table here below:

| time [min] | HMF [g/kg OS] | | | | | | | | |
|---|---|---|---|---|---|---|---|---|---|
| | D-fructose | | | D-glucose | | | D-allulose | | |
| | #1 | #2 | mean | #1 | #2 | mean | #1 | #2 | mean |
| 0 | 0.0 | 0.0 | 0.0 | 0.0 | 0.0 | 0.0 | 0.0 | 0.0 | 0.0 |
| 30 | 0.9 | 0.9 | 0.9 | 0.2 | 0.2 | 0.2 | 1.4 | 1.3 | 1.4 |
| 90 | 6.4 | 6.4 | 6.4 | 0.8 | 0.9 | 0.8 | 9.1 | 11.0 | 10.1 |
| 180 | 10.9 | 11.3 | 11.1 | 1.5 | 1.5 | 1.5 | 17.9 | 19.3 | 18.6 |

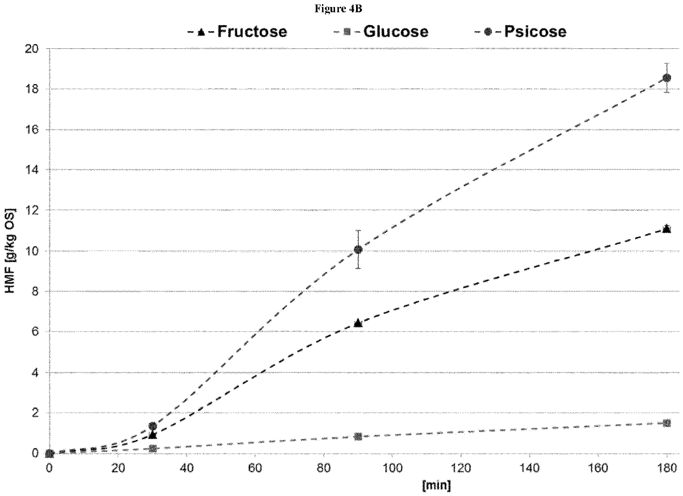

These results are further illustrated in Figure 4B.

### Results and conclusions:

The following conclusions can be drawn from the above experimental results:

The monosaccharides D-glucose, D-fructose and D-allulose as well as the disaccharides mannose, cellobiose and sucrose showed different tendency towards HMF formation and color formation when employed as starting materials in caramelization experiments on a laboratory scale. The following ranking was unexpectedly found:
D-allulose > D-fructose > sucrose > cellobiose/maltose > D-glucose.

D-psicose as starting material in the formation of caramel provided yields of up to 41 wt.-%. Compared to D-fructose and D-glucose, in all experiments D-allulose provided the highest contents of HMF and EBC color intensities.

Thus, in the manufacture of caramels and caramel syrups, employing D-allulose as a starting material instead of conventional sugars such as D-fructose may lower the required reaction temperature and/or reduce the required reaction times. Caramelized products having conventional HMF contents and desired EBC color intensities may thus be obtained from D-allulose at reduced energy consumption and after shorter reaction times.

The reactions that were conducted at 120 °C and at 160 °C illustrate the influence of temperature on color and HMF content. The higher the temperatures and the longer the reaction times, the higher the contents of HMF and the higher the EBS color intensities. Accordingly, selection of starting material, reaction time and reaction temperature play an essential role in the process of caramel formation.

While a high content of HMF in a final caramel product may not be desirable, in the above examples it is essentially used as an indicator of the progress of the caramelization reaction. It is known that certain typical caramel ingredients are formed through HMF as an intermediate, especially caramel ingredients that have a coloring effect. When further treating the thus obtained caramels, the HMF level may be reduced again to a desired value without decoloring.

## Claims

1. A method for the preparation of an edible allulose caramel comprising the steps of
(a) providing an allulose composition, wherein the total content of saccharides including the content of allulose is at least 50 wt.-% relative to the total weight of the allulose composition; and wherein the allulose composition comprises an acid and/or a base; and
(b) caramelizing at least a portion of the allulose that is contained in said allulose composition, wherein step (b) is performed until the obtained caramel has a EBC color intensity of at least 50.

2. The method according to claim 1, wherein the content of allulose in the allulose composition is at least 85 wt.-% relative to the total weight of the allulose composition.

3. The method according to any of the preceding claims, wherein the allulose composition comprises an acid, wherein the acid is an organic acid or an inorganic acid; preferably wherein the acid is sulfuric acid, sulfurous acid, or a carboxylic acid.

4. The method according to any of the preceding claims, wherein the allulose composition comprises a base, wherein the base is an organic base or an inorganic base; preferably an inorganic base being selected from ammonia and hydroxides.

5. The method according to any of the preceding claims, wherein step (b) involves the application of heat.

6. The method according to claim 5, wherein in step (b) the allulose composition is heated to a temperature of at least 105 °C; preferably at least 160 °C.

7. The method according to any of the preceding claims, wherein step (b) is performed for a duration of
- at least 5 minutes; and/or
- not more than 600 minutes.

8. The method according to any of the preceding claims, comprising the additional step of
(c) adjusting the pH value of the product obtained in step (b) to a value within the range of from 6 to 8, preferably by adding a sufficient quantity of an acid and a base, respectively.

9. An allulose caramel, which has an EBC color intensity of at least 50.

10. The caramel according to claim 9, which is obtainable by a method according to any of claims 1 to 8.

11. The caramel according to claim 9 or 10, which has a content of hydroxymethylfurfural (HMF) of not more than 1000 ppm, relative to the total weight of the caramel.

12. The caramel according to any of claims 9 to 11, which has an EBC color intensity of not more than 16000; preferably not more than 1000.

13. Use of a caramel according to any of claims 9 to 12 as aroma and/or as coloring agent.

14. A foodstuff or a beverage comprising a caramel according to any of claims 9 to 12.

## Patentansprüche

1. Verfahren zur Herstellung eines essbaren Allulosekaramells, umfassend die Schritte:
(a) Bereitstellung einer Allulosezusammensetzung, wobei der Gesamtgehalt an Sacchariden einschließlich des Gehalts an Allulose mindestens 50 Gew.-%, bezogen auf das Gesamtgewicht der Allulosezusammensetzung, beträgt und wobei die Allulosezusammensetzung eine Säure und/oder eine Base umfasst, und
(b) Karamellisierung von mindestens einem Teil der in der Allulosezusammensetzung enthaltenen Allulose, wobei Schritt (b) durchgeführt wird, bis das erhaltene Karamell eine EBC-Farbintensität von mindestens 50 aufweist.

2. Verfahren nach Anspruch 1, wobei der Gehalt an Allulose in der Allulosezusammensetzung mindestens 85 Gew.-%, bezogen auf das Gesamtgewicht der Allulosezusammensetzung, beträgt.

3. Verfahren nach einem der vorhergehenden Ansprüche, wobei die Allulosezusammensetzung eine Säure umfasst, wobei es sich bei der Säure um eine organische Säure oder eine anorganische Säure handelt, wobei es sich bei der Säure vorzugsweise um Schwefelsäure, schweflige Säure oder eine Carbonsäure handelt.

4. Verfahren nach einem der vorhergehenden Ansprüche, wobei die Allulosezusammensetzung eine Base umfasst, wobei es sich bei der Base um eine organische Base oder eine anorganische Base, vorzugsweise eine anorganische Base, die aus Ammoniak und Hydroxiden ausgewählt ist, handelt.

5. Verfahren nach einem der vorhergehenden Ansprüche, wobei Schritt (b) die Anwendung von Hitze beinhaltet.

6. Verfahren nach Anspruch 5, wobei die Allulosezusammensetzung in Schritt (b) auf eine Temperatur von mindestens 105 °C, vorzugsweise mindestens 160 °C, erhitzt wird.

7. Verfahren nach einem der vorhergehenden Ansprüche, wobei Schritt (b) für eine Dauer von
- mindestens 5 Minuten und/oder
- nicht mehr als 600 Minuten
durchgeführt wird.

8. Verfahren nach einem der vorhergehenden Ansprüche, umfassend den zusätzlichen Schritt:
(c) Einstellung des pH-Werts des in Schritt (b) erhaltenen Produkts auf einen Wert im Bereich von 6 bis 8, vorzugsweise durch die Zugabe einer hinreichenden Menge einer Säure bzw. einer Base.

9. Allulosekaramell, das eine EBC-Farbintensität von mindestens 50 aufweist.

10. Karamell nach Anspruch 9, das durch ein Verfahren nach einem der Ansprüche 1 bis 8 erhältlich ist.

11. Karamell nach Anspruch 9 oder 10, das einen Gehalt an Hydroxymethylfurfural (HMF) von nicht mehr als 1000 ppm, bezogen auf das Gesamtgewicht des Karamells, aufweist.

12. Karamell nach einem der Ansprüche 9 bis 11, das eine EBC-Farbintensität von nicht mehr als 16.000, vorzugsweise nicht mehr als 1000, aufweist.

13. Verwendung eines Karamells nach einem der Ansprüche 9 bis 12 als Aroma und/oder als Färbemittel.

14. Nahrungsmittel oder Getränk, umfassend ein Karamell nach einem der Ansprüche 9 bis 12.

## Revendications

1. Procédé pour la préparation d'un caramel d'allulose comestible comprenant les étapes de
(a) fourniture d'une composition d'allulose, la teneur totale en saccharides, y compris la teneur en allulose, étant d'au moins 50 % en poids par rapport au poids total de la composition d'allulose ; et la composition d'allulose comprenant un acide et/ou une base ; et
(b) caramélisation d'au moins une partie de l'allulose qui est contenu dans ladite composition d'allulose, l'étape (b) étant réalisée jusqu'à ce que le caramel obtenu ait une intensité de couleur EBC d'au moins 50.

2. Procédé selon la revendication 1, la teneur en allulose dans la composition d'allulose étant d'au moins 85 % en poids par rapport au poids total de la composition d'allulose.

3. Procédé selon l'une quelconque des revendications précédentes, la composition d'allulose comprenant un acide, l'acide étant un acide organique ou un acide inorganique ; préférablement l'acide étant l'acide sulfurique, l'acide sulfureux, ou un acide carboxylique.

4. Procédé selon l'une quelconque des revendications précédentes, la composition d'allulose comprenant une base, la base étant une base organique ou une base inorganique ; préférablement une base inorganique qui est choisie parmi l'ammoniac et des hydroxydes.

5. Procédé selon l'une quelconque des revendications précédentes, l'étape (b) impliquant l'application de chaleur.

6. Procédé selon la revendication 5, dans l'étape (b) la composition d'allulose étant chauffée jusqu'à une température d'au moins 105 °C ; préférablement d'au moins 160 °C.

7. Procédé selon l'une quelconque des revendications précédentes, l'étape (b) étant réalisée pendant une durée
- d'au moins 5 minutes ; et/ou
- de pas plus de 600 minutes.

8. Procédé selon l'une quelconque des revendications précédentes, comprenant l'étape supplémentaire de
(c) ajustement de la valeur de pH du produit obtenu dans l'étape (b) jusqu'à une valeur dans la plage allant de 6 à 8, préférablement en ajoutant une quantité suffisante d'un acide et d'une base, respectivement.

9. Caramel d'allulose, qui possède une intensité de couleur EBC d'au moins 50.

10. Caramel selon la revendication 9, qui peut être obtenu par un procédé selon l'une quelconque des revendications 1 à 8.

11. Caramel selon la revendication 9 ou 10, qui possède une teneur d'hydroxyméthylfurfural (HMF) de pas plus de 1 000 ppm, par rapport au poids total du caramel.

12. Caramel selon l'une quelconque des revendications 9 à 11, qui possède une intensité de couleur EBC de pas plus de 16 000 ; préférablement de pas plus de 1 000.

13. Utilisation d'un caramel selon l'une quelconque des revendications 9 à 12 en tant qu'arôme et/ou en tant qu'agent colorant.

14. Produit alimentaire ou boisson comprenant un caramel selon l'une quelconque des revendications 9 à 12.
